# EUROPÄISCHE PATENTSCHRIFT

(11) **EP 1 312 165 B1**
(45) Veröffentlichungstag und Bekanntmachung des Hinweises auf die Patenterteilung: **20.10.2004**
(21) Anmeldenummer: 01969251.6
(22) Anmeldetag: 22.08.2001
(51) Int. Cl.: H03K 7/04, H03K 5/13

(54) **ERZEUGUNGSVERFAHREN FÜR EINEN AUSGABETAKT UND HIERMIT KORRESPONDIERENDE TAKTERZEUGUNGSSCHALTUNG**
METHOD FOR GENERATING AN OUTPUT CLOCK-PULSE AND A CORRESPONDING CLOCK-PULSE GENERATION CIRCUIT
PROCEDE DE PRODUCTION D'HORLOGE DE SORTIE ET DISPOSITIF DE PRODUCTION D'HORLOGE CORRESPONDANT

(30) Priorität: 23.08.2000 DE 10041331
(43) Veröffentlichungstag der Anmeldung: 21.05.2003
(73) Patentinhaber: SIEMENS AKTIENGESELLSCHAFT, 80333 München (DE)
(72) Erfinder: GRIESSBACH, Gunter, 09423 Gelenau (DE)
(86) Internationale Anmeldenummer: PCT/DE2001/003201
(87) Internationale Veröffentlichungsnummer: WO 2002/017491

(56) Entgegenhaltungen:
- EP-A- 0 159 786
- EP-A- 0 183 075
- EP-A- 0 252 638
- US-A- 3 571 732
- US-A- 5 612 973

## Beschreibung

Die vorliegende Erfindung betrifft ein Erzeugungsverfahren für einen Ausgabetakt mit einem Tastverhältnis und eine hiermit korrespondierende Takterzeugungsschaltung.

Insbesondere bei höheren Frequenzen werden zur Erzeugung des Ausgabetaktes Quarzoszillatoren verwendet. Sie weisen üblicherweise ein Tastverhältnis, ein Zeitverhältnis zwischen High-Pegel und Low-Pegel, (vgl. Seite 4, Zeilen 18 und 19 der urspr. eingereichten Beschreibung) von ca. 1:1 auf.

Gemäß dem Nachschlagewerk "Fachausdrücke der Text- und Datenverarbeitung - Wörterbuch und Glossar", herausgegeben von IBM, wird unter "Tastverhältnis" das "Verhältnis der Impulsdauer zur Periodendauer eines Impulses" verstanden.

Aus der einschlägigen Fachliteratur sind verschiedenste Signalformen bekannt. So z.B. aus "Kenneth W. Cattermole: Signale und Wellen - Mathematische Grundlagen und Anwendungen", VCH Verlagsgesellschaft, 1998, eine sogenannte "Rechteck-Impulsfolge" (S. 54; a.a.O.) und aus "Oppenheim, Willsky: Signale und Systeme - Lehrbuch", VCH Verlagsgesellschaft, 1989, eine sogenannte "periodische Rechteckwelle" (S. 180; a.a.O.) sowie eine sogenannte "symmetrische periodische Rechteckwelle" (S. 432; a.a.O.). Die minimale Amplitude einer solchen symmetrischen periodischen Rechteckwelle muss nicht notwendig kleiner als Null sein, wie in dem Fachbuch dargestellt; häufig ist die minimale Amplitude - der Low-Pegel - gleich oder näherungsweise gleich Null. Dies entspricht aber einer einfachen Verschiebung der ansonsten unveränderten Signalform entlang der Ordinate.

In der Terminologie der vorliegenden Anmeldung wird als "Tastverhältnis" das Verhältnis zwischen der Dauer des High-Pegels und der Dauer des Low-Pegels einer zumindest im wesentlichen symmetrischen periodischen Rechteckwelle verstanden. Exakt symmetrische periodische Rechteckwellen weisen - in der Terminologie dieser Anmeldung - ein Tastverhältnis von 1:1 auf (siehe oben), denn gerade aufgrund der Symmetrie der Rechteckwelle entsprich die Dauer High-Pegels genau der Dauer des Low-Pegels einer Periode einer solchen symmetrischen periodischen Rechteckwelle.

Solche symmetrischen periodischen Rechteckwellen sind häufig das Ausgangssignal einer Takterzeugungsschaltung, so daß die symmetrische periodische Rechteckwelle das Taktsignal für eine Schaltung oder ein Gerät darstellt.

Im Stand der Technik kommt es oftmals zu erheblichen Problemen bezüglich ungewollter Hochfrequenzabstrahlung. Zur Einhaltung gesetzlicher Vorschriften und/oder zur Vermeidung störender Interferenzen sind unterschiedliche Maßnahmen erforderlich.

So ist es beispielsweise bei Personalcomputern bekannt, die Takterzeugung derart zu gestalten, dass die Frequenz ständig um einen kleinen Betrag variiert wird. Weist ein Quarzoszillator beispielsweise einen Nennfrequenz von 50 MHz auf, so wird seine tatsächliche Frequenz beispielsweise im Bereich zwischen 49,9 MHz und 50,1 MHz variiert. Damit wird das Störspektrum mit den darin enthaltenen Oberwellen in der Frequenz ständig verschoben. Es kommt zu einer Verteilung des Störspektrum auf einen weiteren Bereich und damit - bezogen auf eine feste Frequenz - zu einer Verringerung der mittleren Störleistung. Bereits in einem relativ kleinen Frequenzband um eine um eine Oberwelle herum ist die abgestrahlte Störleistung aber konstant.

Die Vorgehensweise des Standes der Technik führt bereits zu einer deutlichen Verringerung der mittleren Störleistung pro Frequenz. Sie erfordert aber eine Variation der Taktfrequenz.

Bei manchen Anwendungen, beispielhaft seien Datenübertragungsverfahren mit festgelegter Frequenz und Synchronisationsverfahren genannt, ist jedoch eine derartige Frequenzvariation nicht zulässig. In derartigen Fällen ist das Verfahren des Standes der Technik systembedingt nicht einsetzbar.

Aus US 3 571 732 ist eine Schaltungsanordnung zur spannungsgesteuerten Phasenverschiebung bekannt. Hierbei wird ein Takteingangssignal geteilt und differenziert, um positive und negative Impulse zu erzeugen, die wiederum zwei monstabile Multivibratoren triggern. Die Multivibratorausgänge werden differenziert, kombiniert und die Frequenz wird verdoppelt.

Die Aufgabe der vorliegenden Erfindung besteht darin, ein Erzeugungsverfahren für einen Ausgabetakt und eine hiermit korrespondierende Takterzeugungsschaltung zu schaffen, mittels derer die elektromagnetische Störstrahlung verringerbar ist, ohne die Frequenz variieren zu müssen.

Die Aufgabe wird durch die Kombination der in den Ansprüchen 1 bzw. 6 angegebenen Merkmale gelöst.

Das Tastverhältnis wird somit ständig variiert. Das Tastverhältnis jittert also.

Denn mittels des erfindungsgemäßen Erzeugungsverfahrens bzw. der erfindungsgemäßen Takterzeugungsschaltung wird das Störspektrum gleichmäßiger auf die geradzahligen und die ungeradzahligen Oberschwingungen der Frequenz verteilt, indem kontinuierlich das Verhältnis der Dauer von High- und Low-Anteil einer Periode, insbesondere einer symmetrischen periodischen Rechteckwelle, des Ausgabetaktes variiert wird. Der Störleistungspegel wird also ständig zwischen den einzelnen Oberwellen "umverteilt". Im zeitlichen Mittel wird der Störleistungspegel also reduziert.

Das Jittern des Tastverhältnisses ist vor allem auch deshalb unschädlich, weil der Ausgabetakt in einer Nutzschaltung, der er zugeführt wird, in der Regel heruntergeteilt wird. Nach dem Herunterteilen ist das Jittern aber wieder beseitigt.

Wenn die Frequenzkonstanz nicht zwingend erforderlich ist, kann die elektromagnetische Störstrahlung noch weiter verringert werden, wenn zusätzlich zur Variierung des Tastverhältnisses auch die Taktfrequenz variiert wird.

Die Tastverhältnisvariationsschaltung ist im einfachsten Fall als monostabile Kippschaltung ausgebildet.

Die Takterzeugungsschaltung kann als diskrete Schaltung aufgebaut sein. Vorzugsweise aber ist sie als integrierte Schaltung ausgebildet.

Typische Anwendungsfälle der vorliegenden Erfindung bestehen in der Taktung einer Datenübertragungseinrichtung und der Taktung einer Synchronisationseinrichtung.

Weitere Vorteile und Einzelheiten ergeben sich aus der nachfolgenden Beschreibung eines Ausführungsbeispiels in Verbindung mit den Zeichnungen. Dabei zeigen in Prinzipdarstellung
- FIG 1: eine Takterzeugungsschaltung,
- FIG 2: eine monostabile Kippschaltung und
- FIG 3: den Signalverlauf des Grundtaktes sowie des daraus erzeugten Ausgabetaktes.

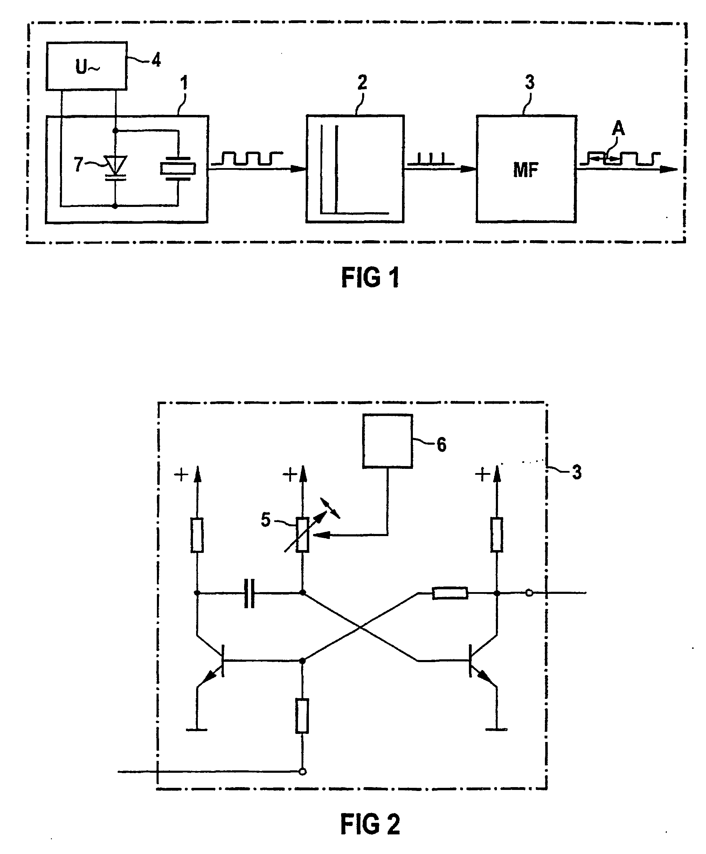

Gemäß FIG 1 weist eine Takterzeugungsschaltung zunächst einen Taktgenerator 1 auf. Der Taktgenerator 1 ist üblicherweise als Quarzoszillator 1 ausgebildet. Der Taktgenerator 1 gibt einen Grundtakt in Form einer symmetrischen periodischen Rechteckwelle (siehe Darstellung in FIG 1) an einen dem Taktgenerator nachgeordneten Pulsgenerator 2 aus, der als Impulsverkürzer dient.

Der Pulsgenerator 2 erzeugt, getriggert durch den Grundtakt, z. B. mit jeder ansteigenden Flanke des Grundtakts, einen Puls. Die Pulse sind also taktsynchron. Sie werden einer dem Pulsgenerator 2 nachgeordneten Tastverhältnisvariationsschaltung 3 zugeführt. Von der Tastverhältnisvariationsschaltung 3 wird ein Ausgabetakt ausgegeben. Der Ausgabetakt weist eine Frequenz f auf.

Gemäß FIG 2 ist die Tastverhältnisvariationsschaltung 3 als monostabile Kippschaltung ausgebildet. Derartige Kippschaltungen sind allgemein bekannt, so dass von einer detaillierten Beschreibung der Schaltung und deren Funktionsweise nachfolgend Abstand genommen wird. Im Unterschied zu den üblichen monostabilen Kippschaltungen weist die Taktverhältnisvariationsschaltung 3 jedoch einen variablen Ladewiderstand 5 auf. Der Ladewiderstand 5 wird von einer Steuerschaltung 6 ständig kontinuierlich oder in Stufen variiert.

Aufgrund des Variierens des Ladewiderstands 5 variiert die Zeit, in der die monostabile Kippschaltung im angeregten Zustand verharrt. Somit wird, wie in FIG 1 mittels eines Doppelpfeiles A angedeutet, das Tastverhältnis des Ausgabetaktes variiert. Das Tastverhältnis, also das Zeitverhältnis zwischen High-Pegel und Low-Pegel variiert also, und zwar in der Regel um den Wert 1:1. Er variiert beispielsweise zwischen 0,9:1,1 und 1,1:0,9 oder zwischen 0,95:1,05 und 1,05:0,95. Die Periodendauer des Ausgabetaktes wird also durch die Taktverhältnisvariationsschaltung 3 nicht verändert. Die Taktverhältnisvariationsschaltung 3 ist allerdings geeignet, die Dauer des High- bzw. Low-Anteils einer Periode zu verändern. Die Dauer des komplementären Low- bzw. High-Anteils ergibt sich aus der Periodendauer abzüglich der Dauer des High- bzw. Low-Anteils.

Wenn die Takterzeugungsschaltung in einer Datenübertragungseinrichtung verwendet wird, der Ausgabetakt also zur Taktung der Datenübertragungseinrichtung dient, muss die Frequenz des Ausgabetaktes konstant sein. Gleiches gilt, wenn die Takterzeugungsschaltung in einer Synchronisationseinrichtung verwendet wird, der Ausgabetakt also zur Taktung der Synchronisationseinrichtung dient. Auch in diesem Fall muss der Ausgabetakt eine konstante Frequenz aufweisen. Aber auch andere Anwendungen, z. B. bei der Taktversorgung von Mikrorechner- und Mikrocontrollersystemen sind denkbar.

Wenn hingegen das Erfordernis der Frequenzkonstanz nicht besteht, kann dem Taktgenerator 1, wie in FIG 1 gestrichelt angedeutet, zusätzlich noch eine Frequenzvariationsschaltung 4 zugeordnet sein. Mittels der Frequenzvariationsschaltung 4 kann die Taktfrequenz des Ausgabetaktes in diesem Fall variiert werden. Das Variieren der Taktfrequenz des Ausgabetaktes kann beispielsweise dadurch bewirkt werden, dass die Frequenzvariationsschaltung eine relativ niederfrequente Wechselspannung an eine dem Frequenzgenerator 1 parallelgeschaltete Kapazitätsdiode 7 ausgibt. Dadurch ändert der Quarzoszillator 1 dann seine Schwingungsfrequenz.

Die obenstehend beschriebene Tastverhältnisvariationsschaltung 3 ist aufgrund ihrer Ausbildung als Monoflop 3 analog aufgebaut. Sie könnte aber auch in Digitaltechnik aufgebaut sein.

Die erfindungsgemäße Takterzeugungsschaltung kann als diskrete Schaltung aufgebaut sein. Vorzugsweise aber ist sie, wie in FIG 1 durch die strichpunktierte Umrahmung angedeutet, als integrierte Schaltung ausgebildet.

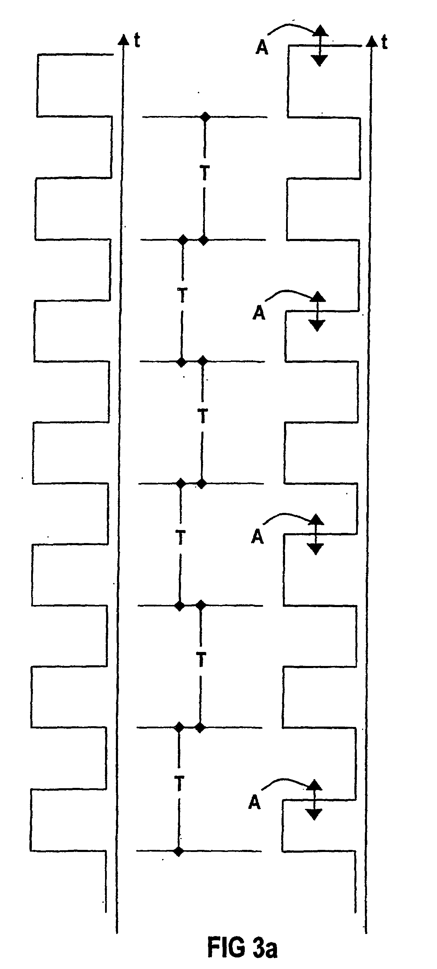

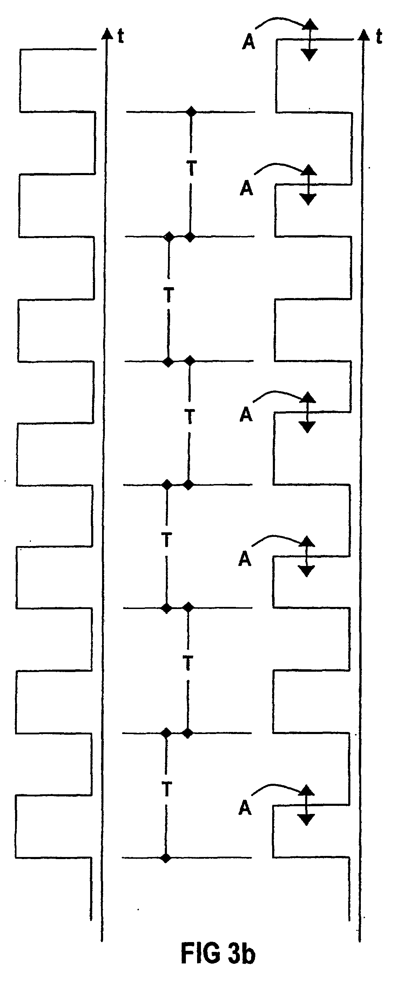

FIG 3a und 3b zeigen jeweils auf ihrer linken Seite den Signalverlauf des Grundtaktes mit einer Periodendauer T und auf ihrer rechten Seiten den Signalverlauf eines daraus erzeigten Ausgabetaktes jeweils über der Zeit t aufgetragen.

Der Grundtakt steht am Ausgang des Taktgenerators 1 (vgl. FIG 1) an. Beim Grundtakt handelt es sich um eine symmetrisch periodische Rechteckwelle. Der daraus mittels der Tastverhältnisvariationsschaltung (vgl. FIG 1) generierte Ausgabetakt ist auch eine periodische Rechteckwelle nur ist hier aufgrund der Variation des Tastverhältnisses keine Symmetrie mehr wie beim Grundtakt gegeben.

Von unten nach oben gesehen hat der exemplarisch in FIG 3a dargestellte Ausgabetakt Tastverhältnisse wie folgt
A : B; mit A < 1 und B > 1,
1 : 1,
A : B; mit A > 1 und B < 1,
1 : 1,
A : B; mit A < 1 und B > 1,
1 : 1 und,
A : B; mit A > 1 und B < 1.

Das Tastverhältnis wird also regelmäßig variiert.

In FIG 3b ist dagegen ein Ausgabetakt dargestellt, bei dem das Taktverhältnis zufällig variiert wird. Von unten nach oben gesehen hat der exemplarisch in FIG 3b dargestellte Ausgabetakt Tastverhältnisse wie folgt
A : B; mit A < 1 und B > 1,
1 : 1,
A : B; mit A < 1 und B > 1,
A : B; mit A > 1 und B < 1,
1 : 1,
A : B; mit A < 1 und B > 1 und
A : B; mit A > 1 und B < 1.

Die Variation des Tastverhältnisses ist in FIG 3a, 3b wieder (vgl. FIG 1) durch den Doppelpfeil A dargestellt.

## Patentansprüche

1. Verfahren zur Erzeugung eines Ausgabetaktes mit einem High- und einem Low-Pegel aus einem Grundtakt in Form einer symmetrischen periodischen Rechteckwelle, wobei der Ausgabetakt ein Tastverhältnis aufweist und wobei das Tastverhältnis dem Zeitverhältnis zwischen High- und Low-Pegel einer Periode des Ausgabetaktes entspricht, wobei das Tastverhältnis zur gleichmäßigeren Verteilung des Störspektrums auf die geradzahligen und die ungeradzahligen Oberschwingungen der Frequenz derart ständig variiert wird, dass das Tastverhältnis jittert.

2. Erzeügungsverfahren nach Anspruch 1,
**dadurch gekennzeichnet,**
**dass** der Ausgabetakt eine Taktfrequenz aufweist und dass die Taktfrequenz variiert wird.

3. Erzeugungsverfahren nach Anspruch 1,
**dadurch gekennzeichnet**
**dass** der Ausgabetakt zur Taktung einer Einrichtung dient, die mit konstanter Frequenz getaktet werden muss.

4. Erzeugungsverfahren nach Anspruche 3,
**dadurch gekennzeichnet,**
**dass** der Ausgabetakt zur Taktung einer Datenübertragungseinrichtung dient.

5. Erzeugungsverfahren nach Anspruch 3,
**dadurch gekennzeichnet,**
**dass** der Ausgabetakt zur Taktung einer Synchronisationseinrichtung dient.

6. Takterzeugungsschaltung mit einem Taktgenerator (1) zum Ausgeben eines Grundtaktes in Form einer symmetrischen periodischen Rechteckwelle, einem dem Taktgenerator (1) nachgeordneten Impulsverkürzer (2) zum Erzeugen taktsynchroner Pulse und einer dem Impulsverkürzer (2) nachgeordneten Tastverhältnisvariationsschaltung (3) zum Ausgeben eines Ausgabetaktes mit einem High- und einem Low-Pegel und mit variablem Tastverhältnis, wobei das Tastverhältnis dem Zeitverhältnis zwischen High- und Low-Pegel einer Periode des Ausgabetaktes entspricht und wobei die Tastverhältnisvariationsschaltung (3) zur gleichmäßigeren Verteilung des Störspektrums auf die geradzahligen und die ungeradzahligen Oberschwingungen der Frequenz durch ständige Variation des Tastverhältnisses als Jitter vorgesehen ist.

7. Takterzeugungsschaltung nach Anspruch 6,
**dadurch gekennzeichnet,**
**dass** die Tastverhältnisvariationsschaltung (3) als monostabile Kippschaltung (3) ausgebildet ist.

8. Takterzeugungsschaltung nach Anspruch 6 oder 7,
**dadurch gekennzeichnet,**
**dass** sie als integrierte Schaltung ausgebildet ist.

9. Takterzeugungsschaltung nach Anspruch 6, 7 oder 8,
**dadurch gekennzeichnet,**
**dass** der Ausgabetakt eine Taktfrequenz aufweist und dass dem Taktgenerator (1) eine Frequenzvariationsschaltung (4) zugeordnet ist.

10. Takterzeugungsschaltung nach Anspruch 6, 7 oder 8, **dadurch gekennzeichnet**,
das ihr eine Einrichtung nachgeordnet ist, die mit konstanter Frequenz getaktet werden muss.

11. Takterzeugungsschaltung nach Anspruch 10,
**dadurch gekennzeichnet , dass** die Einrichtung als Datenübertragungseinrichtung ausgebildet ist.

12. Takterzeugungsschaltung nach Anspruch 10,
**dadurch gekennzeichnet,**
**dass** die Einrichtung als Synchronisationseinrichtung ausgebildet ist.

## Claims

1. Method for generating an output clock having a high level and a low level from a basic clock in the form of a symmetrical periodic square wave, the output clock having a duty ratio and with the duty ratio corresponding to the time ratio between the high level and the low level in one period of the output clock, the duty ratio being constantly varied for more uniform distribution of the interference spectrum between the even-numbered and the odd-numbered harmonics of the frequency, such that the duty ratio is jittered.

2. Generation method according to Claim 1, **characterised in that** the output clock is at a clock frequency, and **in that** the clock frequency is varied.

3. Generation method according to Claim 1, **characterised in that** the output clock is used for clocking a device which has to be clocked at a constant frequency.

4. Generation method according to Claim 3, **characterised in that** the output clock is used for clocking a data transmission device.

5. Generation method according to Claim 3, **characterised in that** the output clock is used for clocking a synchronisation device.

6. Clock generation circuit having a clock generator (1) for outputting a basic clock in the form of a symmetrical periodic square wave, having a pulse shortener (2), which is arranged downstream from the clock generator (1), for generating clock-synchronous pulses, and having a duty ratio variation circuit (3), which is arranged downstream from the pulse shortener (2), for outputting an output clock with a high level and a low level and with a variable duty ratio, with the duty ratio corresponding to the time ratio between the high level and low level in one period of the output clock, and the duty ratio variation circuit (3) being provided as jitter for more uniform distribution of the interference spectrum between the even-numbered and the odd-numbered harmonics of the frequency through constant variation of the duty ratio.

7. Clock generation circuit according to Claim 6, **characterised in that** the duty ratio variation circuit (3) is in the form of a monostable multivibrator circuit (3).

8. Clock generation circuit according to Claim 6 or 7, **characterised in that** it is in the form of an integrated circuit.

9. Clock generation circuit according to Claim 6, 7 or 8, **characterised in that** the output clock is at a clock frequency, and **in that** the clock generator (1) has an associated frequency variation circuit (4).

10. Clock generation circuit according to Claim 6,7 or 8 **characterised in that** it is followed by a device which has to be clocked at a constant frequency.

11. Clock generation circuit according to Claim 10, **characterised in that** the device is in the form of a data transmission device.

12. Clock generation circuit according to Claim 10, **characterised in that** the device is in the form of a synchronisation device.

## Revendications

1. Procédé pour la production d'une horloge de sortie avec un niveau haut et un niveau bas à partir d'une horloge fondamentale sous la forme d'une onde rectangulaire périodique symétrique, l'horloge de sortie comportant un taux d'impulsions et le taux d'impulsions correspondant au rapport temporel entre le niveau haut et le niveau bas d'une période de l'horloge de sortie, le taux d'impulsions étant modifié constamment, en vue d'une répartition plus uniforme du spectre parasite sur les harmoniques pairs et les harmoniques impairs, de telle sorte que le taux d'impulsions est soumis à une gigue.

2. Procédé de production selon la revendication 1,
**caractérisé par le fait que** l'horloge de sortie a une fréquence d'horloge et que la fréquence d'horloge est modifiée.

3. Procédé de production selon la revendication 1,
**caractérisé par le fait que** l'horloge de sortie sert d'horloge pour un dispositif qui doit être soumis à une horloge ayant une fréquence constante.

4. Procédé de production selon la revendication 3,
**caractérisé par le fait que** l'horloge de sortie sert d'horloge pour un dispositif de transmission de données.

5. Procédé de production selon la revendication 3,
**caractérisé par le fait que** l'horloge de sortie sert d'horloge pour un dispositif de synchronisation.

6. Circuit de production d'horloge avec un générateur d'horloge (1) pour la fourniture d'une horloge fondamentale sous la forme d'une onde rectangulaire périodique symétrique, avec un réducteur d'impulsions (2) monté du côté aval du générateur d'horloge (1) et destiné à produire des impulsions synchrones à l'horloge et avec un circuit de variation de taux d'impulsions (3) monté du côté aval du réducteur d'impulsions (2) et destiné à délivrer une horloge de sortie ayant un niveau haut et un niveau bas et ayant un taux d'impulsions variable, le taux d'impulsions correspondant au rapport temporel entre le niveau haut et le niveau bas d'une période de l'horloge de sortie et le circuit de variation de taux d'impulsions (3) étant prévu pour une répartition plus uniforme du spectre parasite sur les harmoniques pairs et les harmoniques impairs en modifiant constamment le taux d'impulsions sous la forme d'une gigue.

7. Circuit de production d'horloge selon la revendication 6,
**caractérisé par le fait que** le circuit de variation de taux d'impulsions (3) est conçu sous la forme d'une bascule monostable (3).

8. Circuit de production d'horloge selon la revendication 6 ou 7,
**caractérisé par le fait qu'**il est conçu sous la forme d'un circuit intégré.

9. Circuit de production d'horloge selon la revendication 6, 7 ou 8,
**caractérisé par le fait que** l'horloge de sortie a une fréquence d'horloge et qu'un circuit de variation de fréquence (4) est associé au générateur d'horloge (1).

10. Circuit de production d'horloge selon la revendication 6, 7 ou 8,
**caractérisé par le fait qu'**un dispositif devant être soumis à une horloge de fréquence constante est monté du côté aval de ce circuit de production d'horloge.

11. Circuit de production d'horloge selon la revendication 10,
**caractérisé par le fait que** le dispositif est conçu sous la forme d'un dispositif de transmission de données.

12. Circuit de production d'horloge selon la revendication 10,
**caractérisé par le fait que** le dispositif est conçu sous la forme d'un dispositif de synchronisation.
